# EUROPEAN PATENT APPLICATION

(11) **EP 1 949 802 A1**
(43) Date of publication of application: **30.07.2008**
(21) Application number: 08150502.6
(22) Date of filing: 22.01.2008
(51) Int. Cl.: A23L 1/36, A23L 1/20, A23L 1/30, A23L 1/03

(54) **Enriched foodstuff and process for enriching the foodstuff**

(30) Priority: 25.01.2007 US 657996
(71) Applicant: Dakota Valley Products, Inc., Carpenter SD 57322 (US)
(72) Inventor: Cossette, Douglas A., Kindred MN Minnesota 58051 (US); Cossette, David D., Barnesville, Minnesota 56514 (US)
(74) Representative: Schmitz, Jean-Marie

(57) **Abstract**

An enriched food product is disclosed that comprises a foodstuff having a composition added thereto. In some embodiments, the composition is impregnated into the foodstuff. In some embodiments, the foodstuff includes a shell. In some embodiments, the foodstuff comprises a seed. In some embodiments, the foodstuff comprises a nut. In some embodiments, the foodstuff comprises a legume. In another aspect of the invention, a method of enriching a foodstuff is disclosed, comprising providing a foodstuff and exposing the foodstuff to the composition. In some implementations, the step of exposing the foodstuff to the composition comprises impregnating composition into the foodstuff. In some implementations, the step of providing the foodstuff comprises roasting the foodstuff.

## Description

### BACKGROUND OF THE INVENTION

### Field of the Invention

The present invention relates to enriched foodstuffs and more particularly pertains to a new foodstuff and process for producing the enriched foodstuff.

### Description of the Prior Art

It is common for individuals to experience reduced mental alertness and physical energy at various times throughout the day. Whether caused by an inconsistent sleep schedule, an inadequate amount of sleep, diet considerations or a host of other reasons, individuals seek out products that provide restorative compounds to increase alertness through nutrition or chemical stimulus. Caffeinated beverages provide caffeine, which increases alertness by stimulating the central nervous system. Sugar in sugar-containing snacks and beverages provide enhanced alertness by temporarily increasing the body's supply of temporary fuel-blood glucose.

In response to an increased demand for products that elevate alertness, an industry has developed which combines fatigue-counteracting compounds like caffeine, guarana and taurine with beverages and various prepared foods. Popular alertness preparations like NoDoz® and Vivarin® contain a quantity of pure caffeine as their active ingredient. Beverages containing caffeine, like coffee, tea and some sodas are popular among many people. So called "energy drinks" are created by combining caffeine with other alertness-boosting ingredients such as guarana and taurine. Foosh Energy Mints® and Buzz Bites® chocolate energy snacks are foods which combine caffeine and candy ingredients-like composition. These various caffeine sources are so popular that approximately 90 percent of North American adults consume caffeine from one of these sources daily (Lovett, Richard, New Scientist 24 Sept. 2005: p. 2518).

Unfortunately for individuals who wish to avoid unnecessary sources of fat and sugar, the selection of beverages and snacks that provide restorative compounds is limited. Though a broad collection of sugar-free restorative beverages is readily available to consumers, foodstuffs with restorative qualities that do not have high fat and/or sugar content are not as prevalent. Individuals with diabetes, for example, typically control their daily intake of sugars as part of the treatment for their chronic disease. Dieters and those highly susceptible to weight gain may also choose to closely monitor and control their intake of sugars. Sugary beverages and snacks are, for these individuals, an undesirable source of restorative compounds.

Further, common sources of restorative compounds act quickly, and the effects rapidly wear off. For example, beverages containing sugar and caffeine are preferably consumed while they are chilled. This encourages users to ingest the beverage before it warms to an unpleasant temperature. For this reason, the individual who wishes to ingest a smaller quantity of restorative compounds over a lower period of time must either drink an upleasantly warm beverage as time passes, or use some alternative means to chill the drink. For users of pharmaceuticals or foodstuffs with restorative compounds like caffeinated gum or caffeine pills, a front-loaded dose of caffeine is absorbed when consumption occurs. This phenomenon leaves the consumer with initial increased awareness that fades quickly. Such a front-loaded dose can also produce the undesirable effects of excessive caffeine consumption, including irritability and restlessness.

Also, without known exception, the methods of incorporating these compounds into the various foodstuffs and beverages comprise mixing the compounds with other ingredients of the foodstuff to form the end product.

It is therefore believed that it would be desirable to provide a foodstuff, such as a foodstuff that is a snack food, enriched with compositions that have a variety of beneficial effects on the human body with lessening or minimizing the detrimental effects of excessive amounts of fat and sugar.

### SUMMARY OF THE INVENTION

In one aspect of the invention, an enriched food product is disclosed that comprises a foodstuff having a composition added thereto. In some embodiments, the composition is impregnated into the foodstuff. In some embodiments, the foodstuff includes a shell. In some embodiments, the composition is coated on the surface of the foodstuff. In some embodiments, the foodstuff comprises a seed, and in further embodiments the seed comprises a sunflower seed. In some embodiments, the foodstuff comprises a nut. In some embodiments, the foodstuff comprises a legume. In some embodiments the foodstuff is roasted. In some embodiments, the composition comprises a stimulant substance. In some embodiments, the composition comprises a nutritional supplement substance.

In another aspect of the invention, a method of enriching a foodstuff is disclosed, comprising providing a foodstuff and exposing the foodstuff to the composition. In some implementations, the step of exposing the foodstuff to the composition comprises impregnating composition into the foodstuff. In some implementations, the step of providing the foodstuff comprises roasting the foodstuff. In some implementations, the step of exposing the foodstuff to the composition includes preparing a mixture including the composition and a fluid base. In some implementations, the step of preparing the mixture includes providing a composition with at least one of the ingredients being selected from the list of ingredients comprising caffeine, taurine, lysine, ginseng, and guarana. In some implementations, the step of exposing the foodstuff to the composition further includes placing a quantity of foodstuff in a tank, submerging the quantity of foodstuff in the mixture, and applying a negative pressure condition to the foodstuff and mixture in the tank to cause a quantity of the mixture to be absorbed into the foodstuff.

There has thus been outlined, rather broadly, the more important features of the invention in order that the detailed description thereof that follows may be better understood, and in order that the present contribution to the art may be better appreciated. There are additional features of the invention that will be described hereinafter and which will form the subject matter of the claims appended hereto.

In this respect, before explaining at least one embodiment of the invention in detail, it is to be understood that the invention is not limited in its application to the details of construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting.

As such, those skilled in the art will appreciate that the conception, upon which this disclosure is based, may readily be utilized as a basis for the designing of other structures, methods and systems for carrying out the several purposes of the present invention. It is important, therefore, that the claims be regarded as including such equivalent constructions insofar as they do not depart from the spirit and scope of the present invention.

Advantages of the invention, along with the various features of novelty which characterize the invention, are pointed out with particularity in the claims annexed to and forming a part of this disclosure. For a better understanding of the invention, its operating advantages and the specific objects attained by its uses, reference should be made to the accompanying drawings and descriptive matter in which there are illustrated preferred embodiments of the invention.

### BRIEF DESCRIPTION OF THE DRAWING

The invention will be better understood and objects of the invention will become apparent when consideration is given to the following detailed description thereof. Such description makes reference to the annexed drawings wherein:

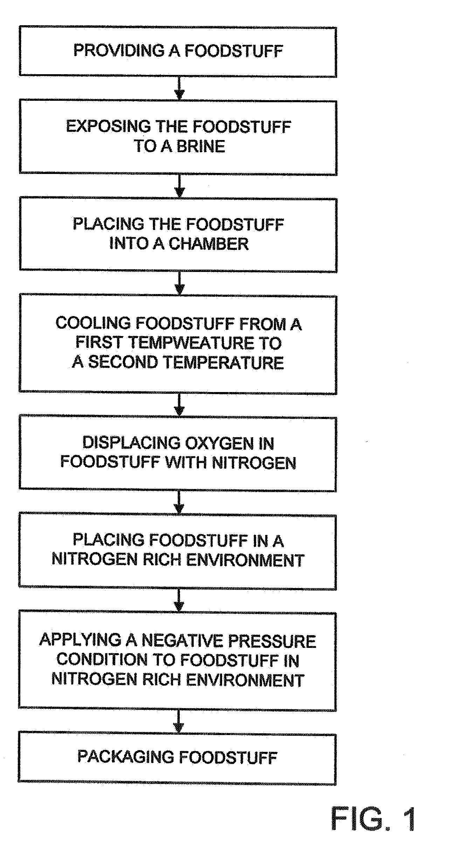

Figure 1 is a schematic flow diagram of steps that may be employed in the process aspect of the present invention.

### DETAILED DESCRIPTION

With reference now to the drawing, and in particular to Figure 1 thereof, a new sunflower enrichment process embodying the principles and concepts of the present invention will be described.

In general, the present invention is directed to enriched foodstuffs, and the compositions and mixtures which are useful for enriching the foodstuffs, as well as methods of using such mixtures to enrich the foodstuffs.

Initially, it is noted that for the purposes of this description, all percentages and ratios are calculated by weight unless otherwise specified. Furthermore, all percentages and ratios are calculated based on the total composition unless otherwise indicated. Also, all of the component or composition quantities are in reference to the active level of that component or composition. The levels are exclusive of any impurities that may be present in commercially available materials. A non-exclusive list of examples of impurities includes residual solvents, manufacturing by-products and inert filler materials.

The compositions and methods herein may comprise, consist essentially of, or consist of any of the elements as described herein. Where the term "composition" or the like is used herein, without reference to a specific composition or dry composition, such term is meant to refer to all of the compositions or dry compositions herein.

Generally, the present invention provides a restorative composition and method for applying that composition to foodstuffs such as natural snack foods such as seeds, nuts, and legumes. These snacks, when impregnated with restorative compositions, provide energy and increase mental alertness. Because these natural snack foodstuffs comprise many individual seed, nuts or legumes, an individual can enjoy the snack while ingesting precisely the quantity of restorative compounds they desire.

Illustratively, when such a restorative composition is applied to a food stuff such as sunflower seeds, the composition penetrates any outer shell that is present, and penetrates the surface of the seed impregnates both the outer shell of the sunflower seed and the enclosed seed itself. It is known that some consumers choose to place a shell-on sunflower seed in their mount before shelling so as to enjoy the flavoring impregnated into the outer shell. The sunflower seed is then extracted and ingested, while the spent outer shell is discarded. By impregnating the outer shell with restorative compounds as well as the seed using the disclosed methods, these consumers can ingest a greater amount of the restorative compounds than a consumer who chooses to first shell the sunflower seed without first extracting the flavoring from the shell. Because sunflower seeds are small, some individuals choose to slowly eat sunflower seeds for long periods of time. The process of absorbing the flavoring from the seed's outer shell followed by extracting and ingesting the seed provides a pastime for these individuals. For those individuals who fidget, sunflower seeds impregnated with restorative compounds provide an ideal source of activity while helping them maintain an increased mental awareness and physical energy.

Broadly, suitable foodstuffs for use in the invention include internal interstices that may be penetrated by a fluid when a relatively low pressure condition is applied to the foodstuff, so that the fluid (and compositions carried in the fluid) may impregnate the foodstuff.

More particularly, suitable foodstuffs may include foods that are typically dried or roasted or both dried and roasted to form a prepared snack food.

Still more particularly, the foodstuffs suitable for use in the invention may include seeds, legumes, and nuts, although other edibles, and especially those edibles commonly used as snack-type foods, may be utilized. The foodstuffs may include the protective shells, or may be removed any protective shell that covers the foodstuff. Exemplary seeds include, for example, sunflower seeds, and the like. Exemplary legumes include peanuts, soybeans, and the like. Exemplary nuts include both botanical nuts (which are encompassed by the botanical definition of a "seed") and foodstuffs that are referred to as "nuts" in culinary parlance, and may include almonds, Brazil nuts, cashews, macadamia nuts, pine nuts, pistachio nuts, and the like.

The compositions that may be employed for impregnating or infusing the foodstuffs may comprise nutrients or nutritional supplements, including vitamins and minerals, as well as those nutrients that are antioxidants or have antioxidant properties. Some examples of nutrients include folic acid (vitamin B9}, vitamin B6, vitamin B12, and vitamin C.

Other compositions that may be employed for impregnating the foodstuffs may comprise amino acids and amino acid derivatives, such as arginine, carnitine, taurine, lysine, and creatine.

Additional compositions that may be used for impregnating the foodstuffs may also comprise stimulant or stimulating compositions that that increase alertness and wakefulness in humans. These stimulating compositions may include caffeine and the various forms of caffeine, such as nicotine, glucuronolactone, and methylated xanthine derivatives such as caffeine, paraxanthine, theophylline, and theobromine. Caffeine is known in the art as an odorless, bitter, white powder that is soluble in water and is present in numerous plant species. The chemical composition for caffeine is 1, 3, 7-trimethylxanthine. It is commonly obtained from coffee, tea, kola nuts, guarana or mate. Caffeine is sometimes referred to as guaranine or mateine, names derived from plants with a high content of the substance. Guarana extracts may be used as a stimulating composition because of their stimulant-properties. Other stimulants include paraxanthine, theophylline and theobromine, which are all bitter alkoid compounds, and are similar in structure to caffeine. Paraxanthine is a central nervous system stimulant with a potency roughly equal to that of caffeine. Theophylline is a compound found naturally in tea that has a number of therapeutic uses, including utility as an anti-inflammatory, increasing the heart rate, increasing heart contractility and efficiency. Theobromine is an alkoid found mainly in chocolate. In pure form, it is a white powder and serves as a mild stimulant with mood elevating effects. Theobromine is distinguished from caffeine by its mild effect and lack of awareness increasing qualities.

Other non-limiting examples of suitable compositions include compositions that have sedative properties and stamina increasing properties, such as, for example, ginseng (the common name for the Araliaceae family of tropical herbs, shrubs, and trees).

Still another suitable composition for the invention is extracts of the ginkgo biloba tree, and another is inositol.

While it is recognized that some of the compositions that may be employed in the invention may naturally occur in the particular foodstuff being enriched, the invention may be employed to enhance the level of the composition present in the foodstuff.

Generally, the compositions contemplated for impregnating the foodstuffs are compounds that are not used as flavorings or as flavoring additives, and do not have a distinctive or pleasing flavor. While the compounds may have some flavor, the flavor is generally not pleasing and may even need to be masked by flavors which are not within the group of compounds contemplated here. For example, caffeine typically has a bitter taste that does not add to the flavoring of the foodstuff, and may need to be masked by flavorings. In one implementation of the invention, a flavoring employed to flavor the foodstuff (for example, to mask any taste of one or more of the compositions) is a salt, such as sodium chloride or a salt including sodium chloride. A preferred salt form is known to those skilled in the art as Alberger salt, which is produced by the Alberger process and results in a physical form having the character of substantially two-dimensional flakes instead of the character of three-dimensional crystals. The use of Alberger salt as a flavoring compound increases the yield of salt that is deposited on the foodstuff after treatment with a solution that includes Alberger salt. Another flavoring that may employed for flavoring the foodstuff is a sweetening agent, such as, for example, sugar.

The compositions disclosed herein may implemented in a mixture with a liquid base and one or more of the compositions for the purpose of enriching the foodstuff, although the liquid base may not remain with the composition once the foodstuff has been exposed or impregnated into the foodstuff. The liquid base may thus act as a carrier for the composition during the process of impregnating the foodstuff with the composition.

In some implementations of the invention, the mixture may des comprises at least about 60% water; one or more of the compositions collectively comprising no more than 10%; and one or more flavoring compounds, typically salt, comprising less than 30%, all by weight of the total mixture.

More specifically, in one non-limiting example of ranges of components that may be included in the mixtures the mixture includes:
(a) at least approximately 60% water;
(b) from approximately 0.05% to approximately 20% of a sweetening agent;
(c) from approximately 0.01% to approximately 5% of caffeine
(d) from approximately 0.01% to approximately 5% of taurine;
(e) from approximately 0.01% to approximately 5% of lysine;
(f) from approximately 0.001% to approximately 1% of ginseng; and
(g) less than approximately 30% salt.

The above list of ranges is merely illustrative of the amounts of components of the mixture that may be used in the mixture, and various components of the mixture that are listed may be omitted or additional components may be included.

The invention may also encompass a method aspect that is highly suitable for impregnating the foodstuff with the composition as discussed above, and is schematically depicted in Figure 1. The method may include providing water that may be suitably prepared by filtering the water and softening the water as needed, although this step is not critical. For example, if filtration is performed to remove particles down to approximately 5 microns or less, softening of the water may not be needed. The water may also be heated to a temperature in the range of approximately 103 degrees Fahrenheit (approximately 55C) to approximately 160 degrees F (approximately 72 C), with higher temperatures in the range maximizing the penetration of the water and other components of the mixture into the foodstuff.

A mixture is prepared using water, such as the prepared water, and the desired components of the mixture, such as one or more of the compositions disclosed herein. In a preferred implementation of the method, salt is added to the mixture to form an enhanced brine, although this is not critical to the practice of the invention. Illustratively, the mixture may have the components listed above in the ranges listed above. Optionally, the mixture may include other components such as a sweetening agent.

A quantity of the foodstuff may be placed in a container, such as a tank has the capability to impose a reduced or negative pressure condition on the interior of the tank as well as any contents of the interior of the tank.

The quantity of the foodstuff may then be submerged in the mixture, which may be accomplished by adding the mixture to the tank in which the foodstuff is positioned. Those skilled in the art will recognize that the mixture could be placed into the tank and then the quantity of foodstuff added to the mixture in the tank. However, it is preferred to add the mixture to the tank in which the foodstuff is already positioned, so that more mixture is not added to the tank than is needed to cover the foodstuff.

A relatively low pressure condition (relative to atmospheric condition) is applied to the interior of the tank as well as the contents of the interior of the tank. The low pressure condition is preferably a negative pressure condition, sometimes referred to as a vacuum condition, and includes removing a quantity of gas or air located in the interior of the tank from the tank. This step causes a portion of the mixture to be absorbed into the foodstuff. This absorption or impregnation of the composition into the foodstuff includes movement of the mixture through any shell present on the foodstuff and though the outer surface of the foodstuff into interior pores or spaces of the foodstuff. The degree of absorption of the mixture may vary, and generally will be in the range of approximately 10 to approximately 20 percent of the absorbed by the foodstuff, with the typical absorption being approximately 16 percent.

The application of the negative pressure condition to the contents of the tank causes a portion of the mixture to be absorbed into the foodstuff, and as a result the quantity of the mixture in the tank (with the exception of the mixture absorbed in the foodstuff) will be reduced. For example, as noted above, the amount of the unabsorbed mixture may be reduced by 10 to 20 percent. An additional amount of the mixture may be put into the tank, and the additional amount may be substantially equal to the mount that was absorbed by the foodstuff so that the amount of mixture in the tank is about the same as prior to the application of the negative pressure condition.

A negative pressure condition may be again applied to the foodstuff and mixture present in the tank. This application of the negative pressure condition may include removing the remaining (unabsorbed) mixture from the tank. This step may cause the mixture to coat the foodstuff in the tank as the mixture is removed, so that a residue of the composition is left on the surface of the foodstuff. Optionally, any remaining mixture may be pushed off of the foodstuff with air blown through the foodstuff.

It should be apparent that the disclosed process may also provide a degree of coating of the foodstuff that partially or completely covers the surface of the foodstuff, and therefore the invention is not limited solely to foodstuff wherein the composition is impregnated in the foodstuff, but also a foodstuff in which the composition is on the surface as a partial or full coating and little or no composition impregnates the foodstuff.

With respect to the above description then, it is to be realized that the optimum dimensional relationships for the parts of the invention, to include variations in size, materials, shape, form, function and manner of operation, assembly and use, are deemed readily apparent and obvious to one skilled in the art in light of the foregoing disclosure, and all equivalent relationships to those illustrated in the drawings and described in the specification are intended to be encompassed by the present invention.

Therefore, the foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the invention.

## Claims

1. An enriched food product, comprising:
a foodstuff having a composition added thereto.

2. The enriched food product of claim 1 wherein the composition is impregnated into the foodstuff.

3. The enriched food product of claim 1 wherein the foodstuff includes a shell.

4. The enriched food product of claim 1 wherein the composition is coated on the surface of the foodstuff.

5. The enriched food product of claim 1 wherein the foodstuff comprises a seed.

6. The enriched food product of claim 1, wherein the seed comprises a sunflower seed.

7. The enriched food product of claim 1 wherein the foodstuff comprises a nut.

8. The enriched food product of claim 1 wherein the foodstuff comprises a legume.

9. The enriched food product of claim 1 wherein the foodstuff is roasted.

10. The enriched food product of claim 1 wherein the composition comprises a stimulant substance.

11. The enriched food product of claim 1 wherein the composition comprises a nutritional supplement substance.

12. A method of enriching a foodstuff with a composition, comprising:
providing a foodstuff; and
exposing the foodstuff to the composition.

13. The method of claim 12 wherein the step of exposing the foodstuff to the composition comprises impregnating the composition into the foodstuff.

14. The method of claim 12 wherein the step of providing the foodstuff comprises roasting the foodstuff.

15. The method of claim 12 wherein the step of exposing the foodstuff to the composition includes preparing a mixture including the composition and a fluid base.

16. The method of claim 15 wherein the step of preparing the mixture includes providing the composition with at least one of the ingredients being selected from the list of ingredients comprising caffeine, taurine, lysine, ginseng, and guarana.

17. The method of claim 15 wherein the step of exposing the foodstuff to the composition further includes
placing a quantity of foodstuff in a tank;
submerging the quantity of foodstuff in the mixture; and
applying a negative pressure condition to the foodstuff and mixture in the tank to cause a quantity of the mixture to be absorbed into the foodstuff.

18. The method of claim 17 wherein the step of exposing the foodstuff to the composition additionally includes replacing in the tank a quantity of mixture absorbed by the foodstuff; and
applying a negative pressure condition to the foodstuff and mixture in the tank.
